# EUROPEAN PATENT APPLICATION

(11) **EP 0 755 624 A1**
(43) Date of publication of application: **29.01.1997**
(21) Application number: 96305471.3
(22) Date of filing: 25.07.1996
(51) Int. Cl.: A01K 39/01

(54) **Feeder for birds**

(30) Priority: 25.07.1995 GB 9515280
(71) Applicant: Lipton, Leslie, Northwood, Middlesex HA6 2DA (GB)
(72) Inventor: Lipton, Leslie, Northwood, Middlesex HA6 2DA (GB)
(74) Representative: Deans, Michael John Percy

(57) **Abstract**

The invention proposes to feed birds by placing solid feed in a hanging basket (12) which preferably has a lid (22) for its open side.

## Description

The present invention relates to feeders for birds, and in particular to feeders adapted to dispense solid food such as suet, or suet and seed mixtures, and peanuts.

Previously, feeders for dispensing suet have been of the type consisting of a wire mesh cage in which the suet is placed. The cage is commonly cuboid in shape hung by a nail from a wall or a tree with the major sides vertical.

There are several problems with this type of feeder. The wall or tree can hinder birds from reaching the food at the back of the feeder. Birds may also be frightened to approach the feeder if it is attached to the side of a house, or if it is attached to a tree-trunk which may be accessible to predators such as cats.

It is also known to fill half a coconut with suet and to suspend it by a piece of string. While attractive to small birds such as tits, and usually inaccessible to cats, such feeders have a number of drawbacks. Firstly the user has in general to construct the feeder themselves. Such feeders are not usually available for sale. The food is only available from the open end and consequently only one or two birds can feed at a time. Similarly, feeders comprising a bell-shape holder of plastics or pottery, filled with suet are known but provide only restricted access to the suet.

There are many known types of feeder for dispensing peanuts to wild birds. The containers for the peanuts generally comprise a mesh of plastics or metal and are often cylindrical in shape.

The present invention provides alternative bird feeders.

There is provided in accordance with a first aspect of the present invention a feeder for wild birds, comprising: a generally bowl-shaped cage formed of elongate elements defining apertures therebetween and having an open side, through which the bowl-shaped cage may be filled with a solid feed, and being adapted to be suspended with the open side uppermost, and provided with an openable lid adapted to cover said open side.

In a second and alternative aspect of this invention, there is provided a feeder for birds, comprising: a generally bowl-shaped cage formed of elongate elements defining apertures therebetween and having an open side, being adapted to be suspended with the open side uppermost, and being filled with a solid feed selected from peanuts and fat-based solid feed.

The invention provides an attractive open-mesh hanging basket-type feeder for wild birds. The feeder can be suspended from above, and so is inaccessible to most predators, and the food can be reached from many angles, so that many birds can feed at once. Alternatively the feeder may be mounted from a bracket. Moreover the feeder can be repeatedly refilled with feed or even used as a conventional hanging basket for plants.

The use of a bowl-shaped cage provides a large feeding area for the birds allowing many birds to feed simultaneously. Furthermore, by providing a solid lid, the feeding area is restricted to the sides and base of the bowl which discourages birds which are unable to support themselves on the sides and base of the cage by gripping the elongate elements. Thus, birds such as magpies and starlings etc. would be discouraged from using the feeder whereas song birds, tits etc. can readily feed. The bowl-shaped cage may take a variety of different shapes providing the height of the bowl is less than its width. Suitable steps include hemispherical; cylindrical providing the height is no more than the diameter of the cylinder; multilobed when viewed in plan, etc. The cage must have a small mesh size e.g. 5 to 8 mm when the feeder is intended to be used with peanuts, but may have a large mesh size e.g. 1 to 5 cm when used 5 with suet and suet-based feed.

The lid of the feeder is preferably solid and may be constructed of plastics, metal sheet etc. The lid is conveniently planar for ease of fabrication but this is not essential. In addition to limiting the feeding area of the birds the lid provides weather protection for the contents of the bowl-shaped cage. This is particularly important when the feed is suet since it prevents collection of rain and dirt on the suet and also provides a shield against the sun which could otherwise cause melting of the suet. The lid is preferably hinged to the cage but it may be completely removable therefore providing it is not easily displaced by birds alighting on the feeder. In the case of a feeder for peanuts it may not be necessary for the entire lid to open since the nuts may be fed into the bowl-shaped cage through a relatively small aperture. Thus a portion of the lid may be operable e.g. by hinging or pivoting or by an aperture and bung arrangement.

In a preferred embodiment the feeder is suspended by three chains or the like attached at one end to the rim of the bowl-shaped cage and secured at the other end to a common link, ring or hook. This provides a stable arrangement which may readily be secured to the branch of a tree or the like or the arm of a bracket mounted on a wall, tree trunk etc.

The invention will now be more particularly described by way of example only with reference to the accompanying drawings, in which:
Figure 1 is a front elevation view of a first embodiment of feeder in accordance with the present invention;
Figure 2 is a perspective view of the feeder of Figure 1;
Figure 3 is a bottom elevation view of the feeder of Figures 1 and 2;
Figure 4 represents a side view of a second embodiment in accordance with the invention;
Figure 5 represents a plan view of the feeder of Figure 4 with the lid removed;
Figure 6 represents a side view of a third embodiment of a feeder in accordance with the invention; and
Figure 7 represents a plan view of the feeder of Figure 6 with the lid opened.

The hanging basket feeder generally indicated at 10 comprises a cage-like wire basket 12 which is suitably made from nylon-coated mild steel or stainless steel wire. The cage-like basket is generally hemi-spherical and made up of longitudinal wires 14 and latitudinal wires 16 which define apertures 18 therebetween. The apertures 18 are sized to allow birds to feed upon suet or other food contained in the basket by pecking at the feed through the apertures. A base plate 20 covers the bottom of the feeder.

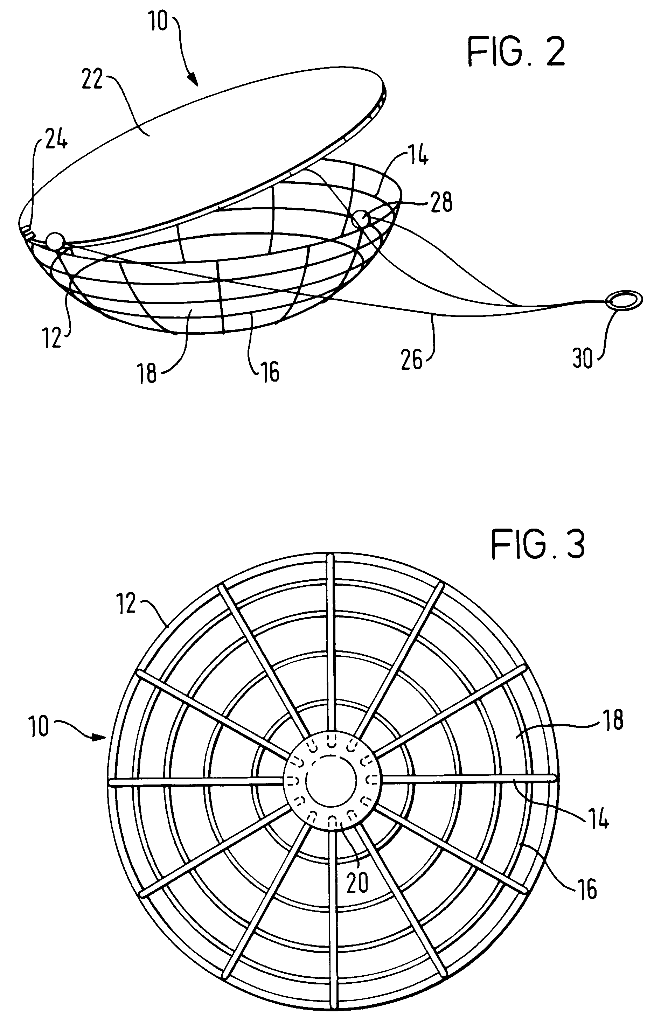

The hanging basket feeder additionally comprises a lid 22 (see Figure 2) which covers the upper opening of the basket, and which can be opened to allow the food to be replenished. This lid may be a solid disc made up of metal or other suitable material, and may be attached to the basket by means of a hinge 24. The solid lid prevents birds feeding from the top of the feeder and protects the feed from rain and sun. In alternative embodiments, the lid may comprise a wire mesh through which the food can be accessed by feeding birds. The lid may also be capable of being completely detached from the basket, and can be attached to the upper rim of the basket by clips or other suitable means.

The hanging basket feeder can be suspended from above by means of chains 26, which are suitably made of galvanised metal. The chains are attached at one end to the rim of the basket by means of links 28 and at the other end to a ring 30 which can be hung on, for example, a nail or hook.

In use, suitable bird food, such as peanuts, suet, suet and seed mixture, is placed in the feeder, which is suspended from a tree, bird table or the like. Birds alight on the feeder, grasping the wires with their feet, and feed by pecking at the food through the holes in the basket-like cage.

An additional feature is that when a bird alights on the hanging-basket feeder, the basket may swing back and forth, so giving added enjoyment to those watching.

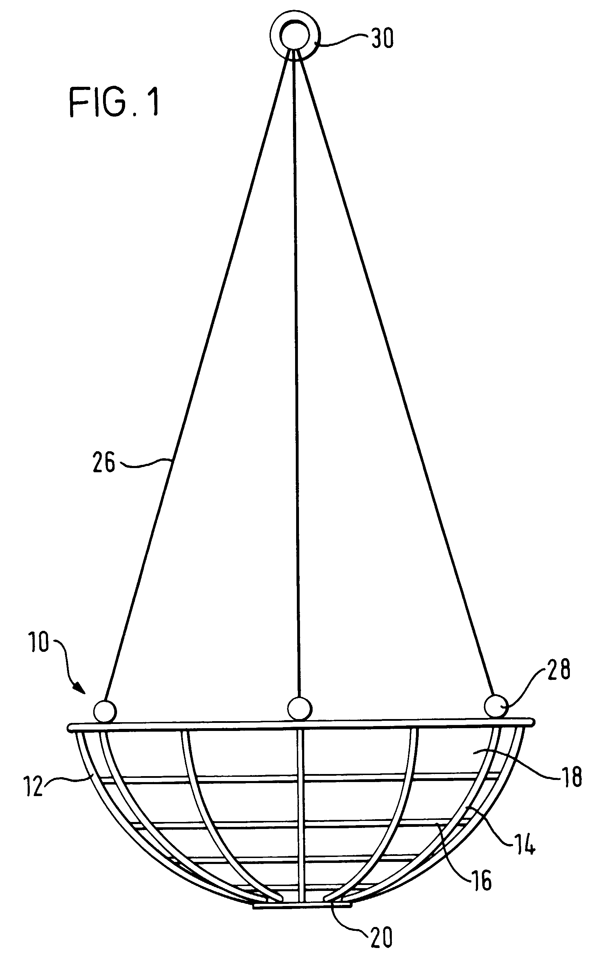

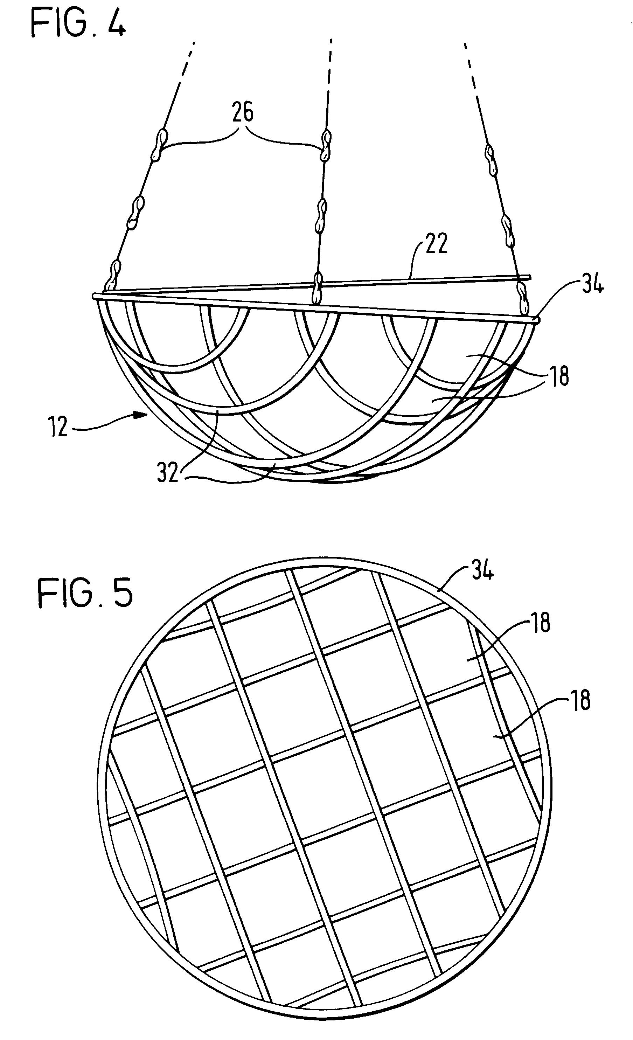

The hanging basket feeder of Figures 4 and 5 is similar to that shown in Figures 1 to 3 with the exception that the cage-like basket construction is made from a series of semi-circular wires 32 attached to a circular rim 34.

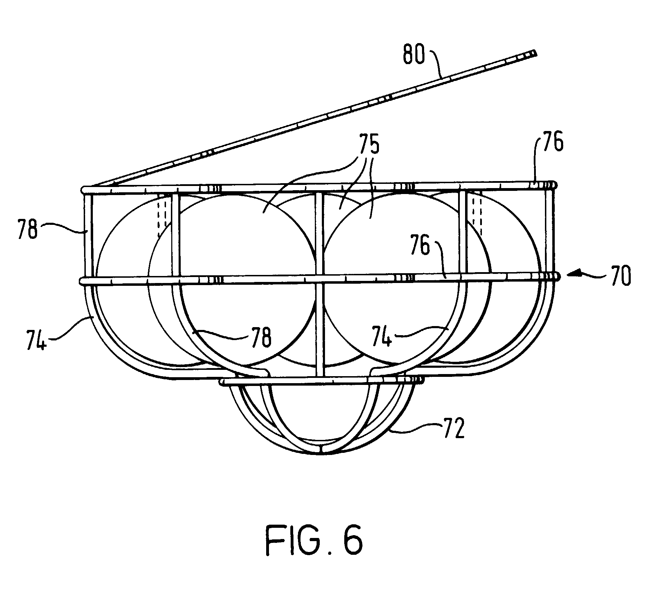

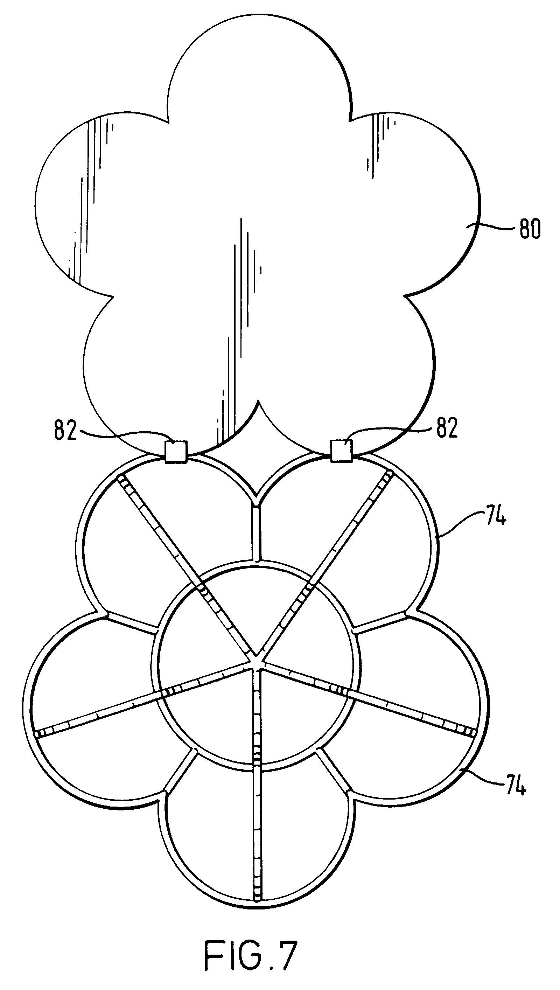

The embodiments shown in Figure 6 and 7 is designed to accommodate balls of suet or other solid foods. Commercially available suet balls have a diameter of from 50 to 55 mm and the basket may readily be dimensioned to accommodate six of these balls.

The cage-like cage bowl 70 comprises a lower hemispherical portion 72 and an upper portion formed of five lobes 74. The hemispherical portion 72 and each of the lobes 74 are dimensioned to accommodate a solid ball 75. The cage may be constructed of latitudinal wires 76 and longitudinal wires 78 although other arrangements of wires to achieve the same shape are possible.

The cage-like bowl 70 is provided with a solid lid 80 which may be secured to the cage by hinges 82. The feeder may be suspended in a similar manner to the embodiments shown in Figures 1 to 5.

In a further embodiment of the invention (not shown) the cage-like bowl is similar to that of Figures 5 and 6 with the exception that the hemispherical portion 72 is removed and the cage is provided with a substantially planar base.

## Claims

1. A feeder for wild birds, characterized in comprising: a generally bowl-shaped cage formed of elongate elements defining apertures therebetween and having an open side, through which the bowl-shaped cage may be filled with a solid feed, and being adapted to be suspended with the open side uppermost, and provided with an openable lid adapted to cover said open side.

2. A feeder according to Claim 1, further characterized in that the interior of the cage is at least partly filled with a solid feed selected from peanuts and fat-based solid feed.

3. A feeder for birds, characterized in comprising a generally bowl-shaped cage formed of elongate elements defining apertures therebetween and having an open side, being adapted to be suspended with the open side uppermost, and being filled with a solid feed selected from peanuts and fat-based solid feed.

4. A feeder according to Claim 3, further characterized in being provided with a lid covering said open side.

5. A feeder according to any preceding claim, further characterized in that the cage is formed of wire mesh of a sufficiently small mesh size to hold peanuts, preferably a mesh size of 5 to 8 mm.

6. A feeder according to any preceding claim, further characterized in that the elongate elements define apertures therebetween which are wider than peanut size, preferably 1 to 5 cm., to expose a substantial surface area to attack by pecking birds when filled with suet or a suet-based feed comprising suet with suspended seeds and the like therein.

7. A feeder according to any preceding claim, further characterized in that the bowl-shaped cage has a height which is less than its width, and in that the bowl-shaped cage generally has the configuration of a hemisphere or of a squat cylinder with a height which is no more than its diameter.

8. A feeder according to any preceding claim, further characterized in that the bowl-shaped cage has a height which is less than its width, and in that it has a multi-lobe configuration in plan, each lobe being arranged to receive a ball, preferably of diameter generally in the region of 50 to 55 mm, of suet or suet-based feed.

9. A feeder according to Claims 1, 2 or 4, or any claim appendant thereto, further characterized in that at least a portion of the lid is openable to allow insertion of feed therethrough.

10. A feeder according to any preceding claim, further characterized in being provided with three or more flexible elongate elements, preferably chains, attached to the cage at angularly spaced locations whereby the feeder may be suspended from a bracket or the branch of a tree or the like in the manner of a hanging basket plant container.

11. Use of a hanging basket made of elongate elements to hold feed for birds.
